# EUROPÄISCHE PATENTANMELDUNG

(11) **EP 3 450 776 A1**
(43) Veröffentlichungstag der Anmeldung: **06.03.2019**
(21) Anmeldenummer: 18191830.1
(22) Anmeldetag: 30.08.2018
(51) Int. Cl.: F16B 7/04, F16K 31/126

(54) **STELLGERÄT FÜR VERFAHRENSTECHNISCHE ANLAGEN**

(30) Priorität: 31.08.2017 DE 202017105252 U
(71) Anmelder: Samson AG, 60314 Frankfurt (DE)
(72) Erfinder: Jährling, Gerald, 63325 Langen (DE); Neuheuser, Hartmut, 56479 Seck (DE)
(74) Vertreter: Puschmann Borchert Bardehle Patentanwälte Partnerschaft mbB

(57) **Zusammenfassung**

Die Erfindung betrifft ein Stellgerät für eine verfahrenstechnische Anlage, mit einem pneumatisch betriebenen Stellantrieb (4), der über ein Joch (10) mit einem Ventilgehäuse (8) eines Stellventils verbunden ist und eine Antriebsstange (16), einen durch den Stellantrieb (4) betätigten Ventilkegel (20) mit einer Ventilstange (18), und einen Stangenverbinder (14) aufweist, welcher die Antriebsstange (16) und die Ventilstange (18) zur Kraftübertragung miteinander verbindet, wobei der Stangenverbinder (14) einerseits verdrehgesichert mit dem Joch (10) verbunden ist. Die Erfindung zeichnet sich dadurch aus, dass der Stangenverbinder (14) andererseits drehfest mit der Ventilstange (18) verbunden ist.

## Beschreibung

Die Erfindung betrifft ein Stellgerät für verfahrenstechnische Anlagen.

Die DE 20 2010 01756 U1 offenbart ein Stellgerät für eine verfahrenstechnische Anlage, mit einem insbesondere pneumatisch betriebenen Stellantrieb, der eine Antriebsstange aufweist, einem durch den Stellantrieb betätigten Ventil mit einer Ventilstange, die insbesondere in axialer Verlängerung zur Antriebsstange angeordnet ist, einem an der Ventilstange befestigten Ventilkegel, und einem Stangenverbinder, welcher die beiden Stangen für eine Kraftübertragung, insbesondere von axialen translatorischen Stellbewegungen, miteinander verbindet und zum Verändern eines Axialabstands zwischen einander zugewandten Enden der Ventilstange und der Antriebsstange ausgelegt ist, um die axiale Gesamtlänge der beiden Stangen einzustellen. Der Stangenverbinder hat zwei aneinander zu befestigende Halbschalen, die zwei Positioniereinrichtungen für eine kraftschlüssige Kopplung der Schalen an den jeweiligen Enden aufweisen, wobei wenigstens eine der Positioniereinrichtungen zum Verändern der axialen Befestigungsposition der Schalen längs einer der Stangen, vorzugsweise der Ventilstange, ausgelegt ist.

EP 2 647 892 A1 offenbart einen Schieber umfassend ein Schiebergehäuse, wobei das Schiebergehäuse einen Spindeltrieb aufweist, wobei der Spindeltrieb an seinem einen Ende einen Schieberkeil zum Absperren einer Rohrleitung aufweist, wobei der Spindeltrieb eine motorisch angetriebene Spindel umfasst. Die Spindel ist durch eine Kupplung axial verschieblich mit einer Achse verbunden, wobei die Achse endseitig den Schieberkeil aufweist. Der Spindeltrieb weist im Bereich der Kupplung einen Kupplungssteg auf, wobei der Kupplungssteg durch mindestens eine parallel zum Spindeltrieb sich erstreckende Säule verschieblich geführt ist. Der Kupplungssteg umfasst zwei Stegschalen, die im Bereich der Säule eine Lagerbuchse bilden.

Ventilkegel als Regelkegel werden meist nicht zu den Öffnungen des Ventils hin ausgerichtet, da meist mehrere Regelkonturen gleichmäßig am Umfang des Kegels angeordnet sind und die Lage der Konturen zu den Gehäuseöffnungen hin eine geringe Relevanz auf die Regelcharakteristik haben oder sich bei kleinen Differenzdrücken der Kegel, nach dessen Justierung, sich nicht verdrehen können und somit keine zusätzliche formschlüssige Verdrehsicherung benötigen. Bei höheren Druckdifferenzen kann sich dann die Lage des Kegels im laufenden Betrieb ändern. Bei einer festen Stangenverbindung zwischen der Ventilstange und der Antriebsstange, würde sich die Verdrehneigung des Kegels bis in den Antrieb hin fortsetzen. Es besteht die Gefahr, dass sich das gesamte Joch mit dem Antrieb verdreht hat, aufgrund der Kegeldrehung, welche von der Fluidströmung durch das Ventil ausgelöst werden kann. Ein weiterer Nachteil ist, dass die Ausströmcharakteristiken des Fluides drehabhängig von der Kegelposition durch die Kegelöffnungen besonders bei Kegeln mit unsymmetrischer Anordnung der Öffnungen und oder unterschiedlich großen Öffnungen unterschiedlich sind. Weiter sind der Verschleiß und die innere Dichtigkeit bei sich drehenden Kegeln schlechter.

Es ist Aufgabe der Erfindung, einen nicht symmetrisch strömungsoptimierten Regelkegel zu den Ein- und Ausgängen des Gehäuses hin festzulegen und ein Verdrehen während des Betriebs mit möglichst wenigen zusätzlichen Bauteilen zu verhindern.

Die Aufgabe bei dem Stellgerät, das einen pneumatisch betriebenen Stellantrieb, der über ein Joch mit einem Ventilgehäuse verbunden ist, eine Antriebsstange, einen durch den Stellantrieb betätigten Ventilkegel mit einer Ventilstange und einen Stangenverbinder aufweist, welche die Antriebsstange und die Ventilstange zur Kraftübertragung miteinander verbindet, wobei der Stangenverbinder einerseits verdrehgesichert mit dem Joch verbunden ist, wird dadurch gelöst, dass der Stangenverbinder andererseits drehfest mit der Ventilstange verbunden ist, sodass eine Verdrehung des Ventilkegels gegenüber dem Joch verhindert wird. Bei montiertem Stangenverbinder ist somit die Ventilstange fest mit dem Stangenverbinder und der Antriebsstange fixiert, sodass sich die Ventilstange gegenüber der Kupplung nicht verdrehen kann. Da der Stangenverbinder als Teil der Verdrehsicherung verwendet wird, wird die Sperre gegen eine Verdrehung der Ventilstange gegenüber dem Joch mit nur wenigen zusätzlichen Bauteilen erreicht.

Die Anordnung des erfindungsgemäßen Stellgeräts ist besonders vorteilhaft, wenn die Öffnungen des Ventilkegels unsymmetrisch verteilt oder unterschiedlich groß sind, weil der Ventilkegel strömungsoptimiert zu den Ventilöffnungen hin exakt ausgerichtet werden kann. Dass bei dem erfindungsgemäßen Stellgerät der Antrieb vor einem Verdrehen oder einem Drehmoment auf die Antriebsstange geschützt ist, ist auch deshalb vorteilhaft, weil die Membrane oder Abdichtungen nicht zusätzlich belastet werden.

Bei dem erfindungsgemäßen Stellgerät ist vorteilhaft, wenn das Joch durch einen Formschluss an dem Ventilgehäuse befestigt ist, sodass die Drehlage des Ventilgehäuses zum Joch fixiert ist. Außerdem ist es vorteilhaft, das Joch vor Verdrehung zu schützen und mittels der Verdrehsicherung eine definierte Lage zum Ventil hin zu schaffen. Auf diese Weise ist außerdem sichergestellt, dass sich das Gesamtgebilde, bestehend aus Ventilkegel, Ventilstange, Antriebsstange, Antrieb und Joch nicht gegenüber dem Gehäuse verdrehen kann.

Als Formschluss zwischen dem Joch und Ventilgehäuse kann ein mechanischer Formschluss dienen, wobei in vorteilhafter Weise eine Kugel/Kugelaufnahme oder eine Stift/Stiftaufnahme oder Passfedern oder Erhebungen und Vertiefungen zwischen dem Joch und Ventilgehäuse zur Anwendung kommen können.

Bei dem erfindungsgemäßen Stellgerät kann der Stangenverbinder in vorteilhafter Weise durch zwei Halbschalen gebildet sein, die durch Schrauben aneinander befestigt sind, und der Stangenverbinder kann dann antriebsstangenseitig eine erste Anschlusseinrichtung und ventilstangenseitig eine zweite Anschlusseinrichtung umfassen, wobei eine drehfeste Verbindung von Ventilstange und Antriebsstange leicht montierbar erreicht werden kann.

Die Anschlusseinrichtung an dem antriebsseitigen Ende der Antriebsstange kann vorzugsweise einen Kopplungskopf aufweisen, den die Halbschalen mittels einer entsprechenden Rillenausbuchtung umgreifen, sodass der Stangenverbinder drehfest an der Ventilstange befestigt ist. Weiterhin kann die Anschlusseinrichtung an dem antriebsseitigen Ende der Antriebsstange eine durch die Halbschalen des Stangenverbinders gebildete Buchse umfassen, in der ein zylindrischen Ansatz an der Antriebsstange drehfest aufgenommen ist. In beiden Fällen wird eine sichere Verbindung der Ventilstange mit der Antriebsstange erreicht.

Bei einer vorteilhaften Ausführung weist das erfindungsgemäße Stellgerät zur drehsicheren Verbindung des Stangenverbinders mit dem Joch das Joch eine Führungseinrichtung auf, an der der Stangenverbinder axialbeweglich über den gesamten Hubbereich entlang gleitbar geführt ist, wobei ein Verdrehen der Ventilstange und damit des Ventilkegels verhindert wird.

Bei dem vorstehenden Stellgerät ist vorteilhaft, dass die Führungseinrichtung eine an dem Joch in Bewegungsrichtung der Ventilstange ausgerichtete Führungsschiene und einen an der Führungsschiene geführten, an dem Stangenverbinder angeformten Führungsschlitten aufweist. Der Führungsschlitten kann dabei zwei Schenkel aufweisen, die beidseitig über Gleitschichten an der Führungsschiene angreifen.

Das erfindungsgemäße Stellgerät kann weiterhin in vorteilhafter Weise an dem Stangenverbinder einen Zeiger an dem Joch und eine Markierung aufweisen, wobei der Hub des Ventilkörpers abgelesen werden kann.

Bei den erfindungsgemäßen Stellgerät kann vorteilhafterweise der Stangenverbinder eine mechanische Hubabgriffseinrichtung umfassen, die mit einem Stellungsregler oder einer Hubmeldeeinrichtung koppelbar ist, um ein dem Hubwert proportionales Stellsignal auszugeben.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung zeigen:
- Fig. 1: eine Schnittsansicht eines erfindungsgemäßen Stellgeräts mit Stangenverbinder;
- Fig. 2: eine Seitenansicht auf den Teil des eines erfindungsgemäßen Stellgeräts mit dem Stangenverbinder;

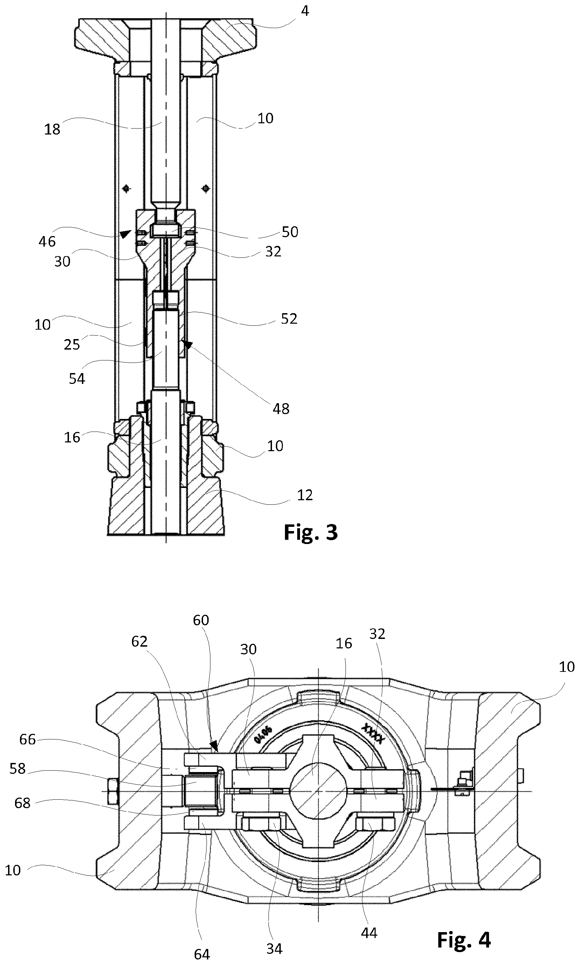

- Fig. 3: einen Schnittsansicht entlang der Linie A - A in Fig. 2;
- Fig. 4: einen Schnittsansicht entlang der Linie B - B in Fig. 2;

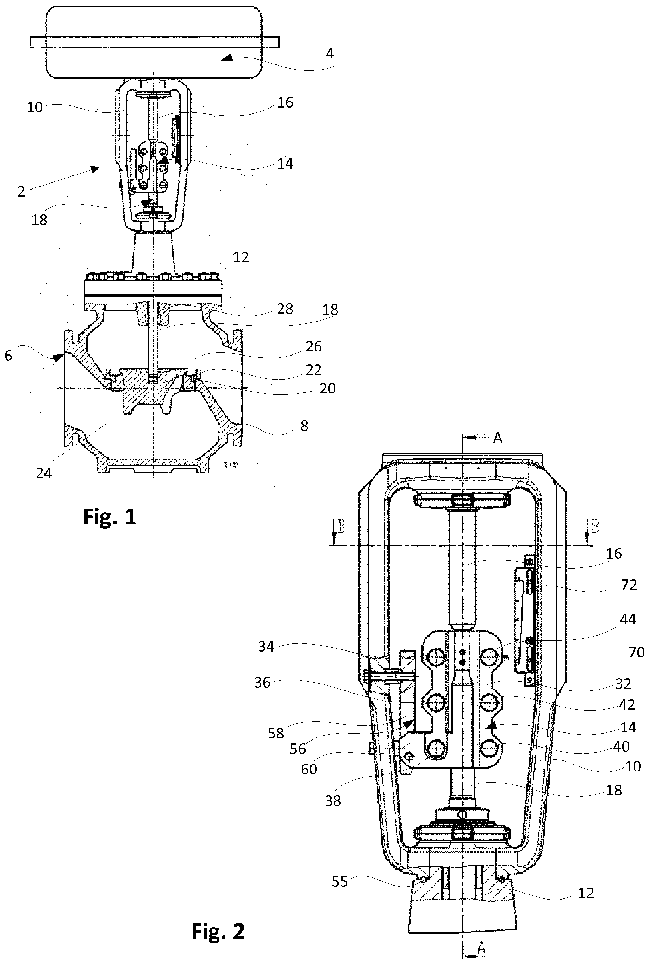

In Fig. 1 ist eine Schnittsansicht eines erfindungsgemäßen Stellgeräts 2 dargestellt. Das Stellgerät 2 umfasst im Wesentlichen einen pneumatischen Stellantrieb 4, ein Stellventil 6 mit einem Ventilgehäuse 8, ein Joch 10, das zwischen dem Stellantrieb 4 und dem Ventilgehäuse 8 bzw. einem Deckel 12 des Ventilgehäuses 8 angeordnet und durch einen Formschluss an dem Ventilgehäuse 8 befestigt ist, sowie einen Stangenverbinder 14, durch den die Stellbewegung von dem pneumatischen Stellantrieb 4 auf das Stellventil 6 übertragen wird. Eine Antriebsstange 16 des Stellantriebs 4 ist aus dem Stellantrieb 4 herausgeführt.

Das Stellventil 6 ist mit einer Ventilstange 18 ausgeführt, die axial fluchtend zur Antriebsstange 16 vertikal ausgerichtet ist, wobei am vom Stellantrieb 4 abgewandten Ende der Ventilstange 18 ein Ventilkegel 20 angeordnet ist. Der Ventilkegel 20 dient dazu, eine Öffnung eines Ventilsitzes 22 freizugeben und/oder zu schließen, um einen Durchfluss durch das Stellventil 6 von einem Eingangsbereich 24 zu einem Ausgangsbereich 26 zu gewährleisten oder zu hemmen.

Zur Führung der Ventilstange 18 ist eine ventilsitzseitige Führungshülse 28 als auch eine Dichtungspackung (nicht gezeigt) vorgesehen. Zum Verbinden des ventilseitigen Endes der Antriebsstange 16 sowie des antriebsseitigen Endes der Ventilstange 18 ist der Stangenverbinder 14 vorgesehen, der durch zwei Halbschalen 30, 32 realisiert ist. Die beiden Halbschalen 30, 32 werden durch Schrauben 34, 36, 38, 40, 42, 44 aneinander befestigt.

Der Stangenverbinder 14, der einerseits verdrehgesichert mit dem Joch 10 und andererseits fest mit der Ventilstange 18 verbunden ist, hat antriebsstangenseitig eine erste Anschlusseinrichtung 46 und eine ventilstangenseitig zweite Anschlusseinrichtung 48. Die Anschlusseinrichtung 46 an dem antriebsseitigen Ende der Antriebsstange 16 umfasst einen Kopplungskopf 50, den die Halbschalen 30, 32 mittels einer entsprechenden Rillenausbuchtung umgreifen, sodass der Stangenverbinder 14 drehfest an der Ventilstange 18 befestigt ist.

Die Anschlusseinrichtung 48 an dem ventilstangenseitigen Ende der Antriebsstange 16 umfasst eine durch die Halbschalen 30, 32 des Stangenverbinders 14 gebildete Buchse 52 und einen zylindrischen Ansatz 54 an der Antriebsstange 16, der in der Buchse 52 drehfest aufgenommen ist.

Der Formschluss zwischen dem Joch 10 und Ventilgehäuse 8 kann eine Kugel/Kugelaufnahme oder Stift/Stiftaufnahme oder Passfedern oder Erhebungen und Vertiefungen zwischen dem Joch und dem Ventilgehäuse aufweisen, wobei in Fig. 2 eine Kugel/Kugelaufnahme-Einrichtung 55 gezeigt ist.

Die drehsichere Verbindung des Stangenverbinders 14 mit dem Joch 10 besteht darin, dass das Joch 10 eine Führungseinrichtung 56 aufweist, an der entlang der Stangenverbinder 14 axialbeweglich über den gesamten Hubbereich der Ventilstange 18 gleitbar geführt ist. Die Führungseinrichtung 56 umfasst eine an dem Joch 10 in Bewegungsrichtung der Ventilstange 18 ausgerichtete Führungsschiene 58 und einen an der Führungsschiene 58 geführten, an dem Stangenverbinder 14 angeformten Führungsschlitten 60. Der Führungsschlitten 60 hat zwei Schenkel 62, 64, die beidseitig über Gleitschichten 66, 68 an der Führungsschiene 58 angreifen.

Der Stangenverbinder 14 kann einen Zeiger 70 aufweisen, und an dem Joch 10 kann eine Markierung 72 vorgesehen sein, wobei der Hub des Ventilkegels 20 abgelesen werden kann. Der Stangenverbinder 14 kann auch eine mechanische Hubabgriffseinrichtung haben, die mit einem Stellungsregler oder einer Hubmeldeeinrichtung koppelbar ist, um ein dem Hubwert proportionales Stellsignal auszugeben.

Die Erfindung ist nicht auf das gezeigte Ausführungsbeispiel beschränkt. Beispielsweise kann die Dichtungsanordnung an anderen Stellen von Stellgeräten, beispielsweise zwischen dem Ventilsitz und dem Ventilgehäuse, angeordnet werden.

### Bezugszeichenliste

- 2: Stellgerät
- 4: Stellantrieb
- 6: Stellventil
- 8: Ventilgehäuse
- 10: Joch
- 12: Deckel
- 14: Stangenverbinder
- 16: Antriebsstange
- 18: Ventilstange
- 20: Ventilkegel
- 22: Ventilsitz
- 24: Eingangsbereich
- 26: Ausgangsbereich
- 28: Führungshülse
- 30,32: Halbschalen
- 34 bis 44: Schrauben
- 46: antriebsseitige Anschlusseinrichtung
- 48: ventilseitige Anschlusseinrichtung
- 50: Kopplungskopf
- 52: Buchse
- 54: Absatz
- 55: Kugel/Kugelaufnahme-Einrichtung
- 56: Führungseinrichtung
- 58: Führungsschiene
- 60: Führungsschlitten
- 62, 64: Schenkel
- 66, 68: Gleitschichten
- 70: Zeiger
- 72: Markierung

## Patentansprüche

1. Stellgerät für eine verfahrenstechnische Anlage, mit einem pneumatisch betriebenen Stellantrieb (4), der über ein Joch (10) mit einem Ventilgehäuse (8) eines Stellventils verbunden ist und eine Antriebsstange (16), einen durch den Stellantrieb (4) betätigten Ventilkegel (20) mit einer Ventilstange (18), und einen Stangenverbinder (14) aufweist, welcher die Antriebsstange (16) und die Ventilstange (18) zur Kraftübertragung miteinander verbindet, wobei der Stangenverbinder (14) einerseits verdrehgesichert mit dem Joch (10) verbunden ist, **dadurch gekennzeichnet, dass** der Stangenverbinder (14) andererseits drehfest mit der Ventilstange (18) verbunden ist.

2. Stellgerät nach Anspruch 1, **dadurch gekennzeichnet, dass** das Joch (10) durch einen Formschluss an dem Ventilgehäuse (8) befestigt ist.

3. Stellgerät nach Anspruch 1 oder 2, **dadurch gekennzeichnet, dass** der Formschluss zwischen dem Joch (10) und Ventilgehäuse (8) eine Kugel/Kugelaufnahme oder Stift/Stiftaufnahme oder Passfedern oder Erhebungen und Vertiefungen zwischen dem Joch (10) und Ventilgehäuse (8) aufweist.

4. Stellgerät nach einem der Ansprüche 1 bis 3, **dadurch gekennzeichnet, dass** der Stangenverbinder (14) durch zwei Halbschalen (30, 32) gebildet ist, die durch Schrauben (34, 36, 38, 40, 42, 44) aneinander befestigt sind, und dass der Stangenverbinder (14), antriebsstangenseitig eine erste Anschlusseinrichtung (46) und ventilstangenseitig eine zweite Anschlusseinrichtung (48) umfasst.

5. Stellgerät nach einem der Ansprüche 1 bis 4, **dadurch gekennzeichnet, dass** die Anschlusseinrichtung (46) an dem antriebsseitigen Ende der Antriebsstange (16) einen Kopplungskopf (50) aufweist, den die Halbschalen (30, 32) mittels einer entsprechenden Rillenausbuchtung umgreifen, sodass der Stangenverbinder (14) drehfest an der Ventilstange (18) befestigt ist.

6. Stellgerät nach einem der Ansprüche 4 oder 5, **dadurch gekennzeichnet, dass** die Anschlusseinrichtung (48) an dem antriebsseitigen Ende der Antriebsstange (16) eine durch die Halbschalen (30, 32) des Stangenverbinders (14) gebildete Buchse (52) umfasst, in der ein zylindrischen Ansatz (54) an der Antriebsstange (16) drehfest aufgenommen ist.

7. Stellgerät nach einem der Ansprüche 1 bis 6, **dadurch gekennzeichnet, dass** zur drehsicheren Verbindung des Stangenverbinders (14) mit dem Joch (10) das Joch (10) eine Führungseinrichtung (56) aufweist, an der der Stangenverbinder (14) axialbeweglich über den gesamten Hubbereich entlang gleitbar geführt ist.

8. Stellgerät nach Anspruch 7, **dadurch gekennzeichnet, dass** die Führungseinrichtung (56) eine an dem Joch (10) in Bewegungsrichtung der Ventilstange (18) ausgerichtete Führungsschiene (58) und einen an der Führungsschiene (58) geführten, an dem Stangenverbinder (14) angeformten Führungsschlitten (60) aufweist.

9. Stellgerät nach Anspruch 8, **dadurch gekennzeichnet, dass** der Führungsschlitten (60) zwei Schenkel (62, 64) aufweist, die beidseitig über Gleitschichten (66, 68) an der Führungsschiene (58) angreifen.

10. Stellgerät nach einem der Ansprüche 1 bis 9, **dadurch gekennzeichnet, dass** an dem Stangenverbinder (14) ein Zeiger (70) und an dem Joch (10) eine Markierung (72) vorgesehen ist, wobei der Hub des Ventilkörpers (20) abgelesen werden kann.

11. Stellgerät nach einem der Ansprüche 1 bis 10, **dadurch gekennzeichnet, dass** der Stangenverbinder (14) eine mechanische Hubabgriffseinrichtung umfasst, die mit einem Stellungsregler oder einer Hubmeldeeinrichtung koppelbar ist, um ein dem Hubwert proportionales Stellsignal auszugeben.
